# EUROPÄISCHE PATENTSCHRIFT

(11) **EP 1 886 894 B1**
(45) Veröffentlichungstag und Bekanntmachung des Hinweises auf die Patenterteilung: **29.06.2011**
(21) Anmeldenummer: 07014549.5
(22) Anmeldetag: 25.07.2007
(51) Int. Cl.: B62B 3/14

(54) **Von Hand bewegbarer Transportwagen**
Transport trolley moved by hand
Chariot de transport pouvant être déplacé à la main

(30) Priorität: 02.08.2006 DE 202006011849 U
(43) Veröffentlichungstag der Anmeldung: 13.02.2008
(73) Patentinhaber: Eifelwerk Heinrich Stein GmbH &Co.KG, 54655 Malbergweich (DE)
(72) Erfinder: Eberlein, Herbert, 89347 Bubesheim (DE)
(74) Vertreter: Maxton Langmaack & Partner

(56) Entgegenhaltungen:
- DE-U1- 8 912 502
- FR-A- 1 306 754
- FR-A- 2 766 149
- US-A- 5 000 468

## Beschreibung

Die Erfindung betrifft einen von Hand bewegbaren, für die Verwendung in SB-Märkten bestimmten Einkaufswagen gemäß dem Oberbegriff des Anspruchs 1, der mit gleichen Einkaufswagen, einen Stapelverbund bildend, Platz sparend stapelbar ist.

Aus der FR 2 766 149 A1 ist ein Einkaufswagen gemäß dem Oberbegriff des Anspruchs 1 bekannt, bei dem der Raddurchmesser der vorderen Lenkrollen gleich dem Raddurchmesser der hinteren Lenkrollen ist.

Aus der US 5 000 468 A ist ein von Hand bewegbarer Transportwagen für Boote bekannt, mit einem Fahrgestell, das zwei vordere Lenkrollen und zwei hintere Festrollen aufweist, einer Schlebeeinrichtung sowie einer Einrichtung zur Aufnahme eines Bootes, wobei der Raddurchmesser der vorderen Lenkrollen kleiner ist als der Raddurchmesser der hinteren Festrollen.

Aus der FR 1 306 754 A ist ein Einkaufswagen gemäß dem Oberbegriff des Anspruchs 1 bekannt, bei dem der Raddurchmesser der vorderen Lenkrollen gleich dem Raddurchmesser der hinteren Lenkrollen ist,

Klassische Beispiele derartiger Einkaufswagen bilden die bekannten, in jedem SB-Markt anzutreffenden Einkaufswagen oder auch jene Einkaufswagen, die eine Ladeplattform aufweisen und meist in Baumärkten Verwendung finden. Kleinere Einkaufswagen, deren maximale Breite etwa bei 600 mm endet, weisen Lenkrollen auf, deren Raddurchmesser mit 125 mm bemessen ist. Größere Einkaufswagen, mit denen sich Lasten bis zu etwa 300 kg bewegen lassen, sind entweder mit Lenkrollen oder mit Lenkrollen und Bockrollen bestückt, deren Raddurchmesser 160 mm beträgt. Die maximale Breite solcher Wagen liegt etwa bei 800 mm. Lankrollen mit einem Durchmesser von 160 mm besitzen den Vorteil, dass sie größer belastbar sind als Lenkrollen mit einem Raddurchmesser von 125 mm und dass sie aufgrund Ihres großen Raddurchmessers Imstande sind, Hindernisse leichter zu überwinden. Nimmt man den zuletzt genannten Vorteil zum Maßstab, wäre es zweckmäßig, auch kleinere Einkaufswagen mit Lenkrollen auszustatten, deren Raddurchmesser größer als 125 mm ist. Hier jedoch zeigen sich Grenzen, die dann erkennbar werden, wenn schmale Einkaufswagen mit großen Lenkrollen einem Stapelverbund gleicher Einkaufswagen entnommen werden sollen. Dann nämlich verhaken die vorderen Lenkrollen eines dem Stapelverbund zu entnehmenden Einkaufswagens mit den benachbart angeordneten Lenkrollen weiterer Einkaufswagen. Die Folge ist, dass Einkaufswagen nur mit Mühe dem Stapelverbund entnommen werden können, dass die Gefahr gegenseitiger Beschädigung der Lenkrollen beim Entnahmevorgang besteht und dass schlimmstenfalls ein Einkaufswagen mit seinen vorderen Lenkrollen, die ja bei der Entnahme des Einkaufswagens eine Schwenkbewegung um 180° durchführen müssen, mit anderen Lenkrollen so verhaken und verkeilen, so dass der Einkaufswagen aus einem Stapelverbund nicht mehr entnehmbar ist. Es ist deshalb verständlich, dass Marktketten solche Einkaufswagen ihren Kunden nicht überlassen können.

Es ist Aufgabe der Erfindung, einen Einkaufswagen der eingangs genannten Art so weiterzuentwickeln, dass das Schieben dieses Wagens auf unebenem Boden, beispielsweise auf gepflastertem Boden erleichtert wird und dass durch die aufzufindende Maßnahme das Entnehmen dieses Einkaufswagens aus einem Stapelverbund gleicher Einkaufswagen ohne Schwierigkeiten möglich ist.

Die Erfindung schlägt zur Lösung der Aufgabe einen Einkaufswagen gemäß Anspruch 1 vor.

Bei dem vorgeschlagenen Einkaufswagen ist vorgesehen, dass der Raddurchmesser der vorderen Lenkrollen größer ist als der Raddurchmesser der hinteren Lenkrollen.

Die aufgefundenen Lösungsvorschläge weisen folgende Vorteile auf:
Durch den größer gewählten Raddurchmesser der vorderen Lenkrollen lässt sich der Einkaufswagen, um den ersten Vorteil zu nennen, leichter auf unebenem Boden, beispielsweise auf Pflasterboden, schieben. Der Einkaufswagen überwindet Bodenunebenheiten mit seinen großen vorderen Lenkrollen, die z. B. einen Raddurchmesser von 160 mm aufweisen, wesentlich leichter als bisher bekannte Einkaufswagen, deren vordere Lenkrollen immer den gleichen Raddurchmesser von beispielsweise 125 mm besitzen wie die hinteren Lenkrollen.Bei der vorgeschlagenen Anordnung der vorderen und der hinteren Lenkrollen in einem Stapelverbund, bei dem die Einkaufswagen ja engstmöglich gestapelt sind, verbleibt für die vorderen Lenkrollen in vorteilhafter Weise ausreichend Raum, damit sich die Räder der vorderen Lenkrollen beim Herausziehen eines Einkaufswagens aus dem Stapelverbund um 180° drehen können, ohne mit den Rädern oder den Radgehäusen der hinteren Lenkrollen benachbarter Einkaufswagen zu verhaken oder zu verklemmen. Letzteres ist möglich, weil der Raddurchmesser der hinteren Lenkrollen der Einkaufswagen kleiner gewählt ist als der Raddurchmesser der vorderen Lenkrollen. Derart gestaltete Einkaufswagen lassen sich somit mühelos einem Stapelverbund entnehmen.
Diesem zweiten Vorteil schließt sich ein dritter Vorteil an, der darin erkennbar ist, dass der neuheitsgemäße Einkaufswagen billiger herzustellen ist als ein Einkaufswagen, der ausschließlich mit vier großen und deshalb teureren Lenkrollen ausgestattet ist. Zwei kleine Lenkrollen sind schlichtweg billiger als zwei große Lenkrollen gleicher Qualität.

Die Neuerung wird anhand eines Ausführungsbeispieles näher erläutert. Es zeigt:
- Fig. 1: einen Einkaufswagen in Seitenansicht;
- Fig. 2: ebenfalls in Seitenansicht mehrere Einkaufswagen in einem Stapelverbundso- wie
- Fig. 3: ausschnittweise einen Stapelverbund in Draufsicht mit Blick auf die vorderen und hinteren Lenkrollen der gestapelten Einkaufswagen.

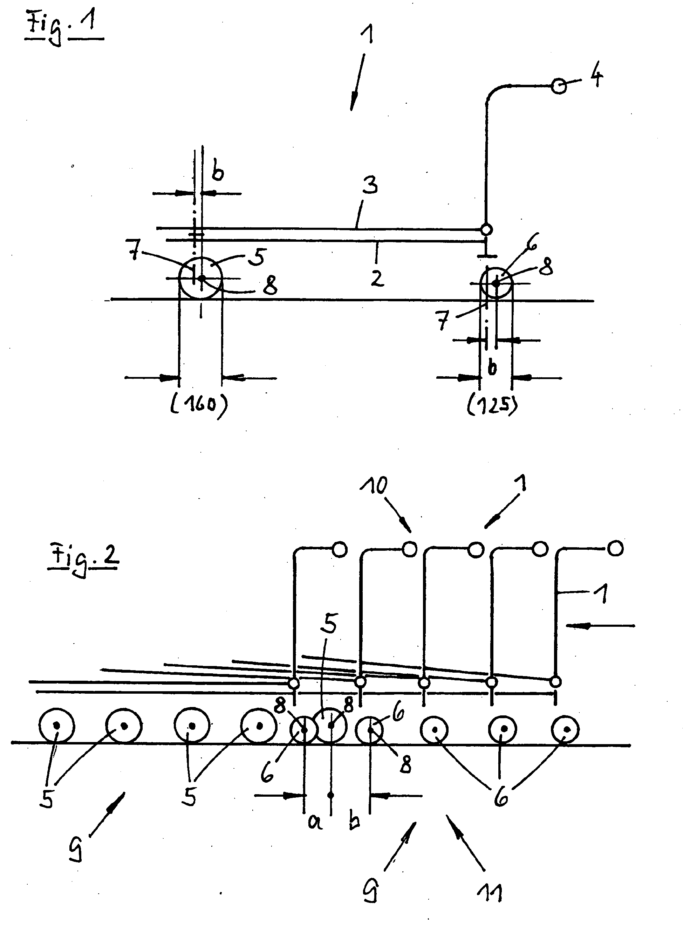

Der in Fig. 1 dargestellte Einkaufswagen 1 steht stellvertretend für alle Arten von Einkaufswagen 1, die von Hand bewegbar sind und die sich in bekannter Weise Platz sparend, einen Stapelverbund 10 bildend, ineinander schieben lassen. Typische Vertreter dieser Gattung sind die üblichen in jedem SB-Markt anzutreffenden Einkaufswagen sowie alle Einkaufswagen 1, die meist eine Ladeplattform 3 aufweisen und bevorzugt in Baumärkten und/oder Gartencentern Verwendung finden. Der im Beispiel dargestellte Einkaufswagen 1 weist ein Fahrgestell 2 auf, das mit zwei vorderen 5 und mit zwei hinteren Lenkrollen 6 ausgestattet ist. Dass es sich hier um Lenkrollen 5, 6 handelt, erkennt man in der Zeichnung durch die jeweils eingezeichnete senkrechte Schwenkachse 7, die jeder Lenkrolle 5, 6 zugeordnet ist. Auf die Darstellung der Radgabel und des Schwenklagers einer jeden Lenkrolle 5, 6 ist verzichtet worden, da dies zum allgemeinen Wissensstand gehört. Eingezeichnet sind auch die horizontal angeordneten Radachsen 8 der vorderen und der hinteren Lenkrollen 5, 6. Die senkrechte Schwenkachse 7 einer jeden Lenkrolle 5, 6 ist in bekannter Weise in einem Abstand b zur jeweiligen Radachse 8 angeordnet. Die Radachsen 8 sind somit nachgeordnet. Man spricht hier vom so genannten "Nachlauf". Der Raddurchmesser der vorderen Lenkrollen 5 ist größer gewählt als der Raddurchmesser der hinteren Lenkrollen 6. Beim vorliegenden AusfOhrungsbeispiel beträgt der Raddurchmesser der vorderen Lenkrollen (5) beispielsweise 160 mm und der Raddurchmesser der hinteren Lenkrollen (6) ist mit 125 mm bemessen. Gängige Raddurchmesser für Einkaufswagen 1 sind 75, 100, 125 und 160 mm. Es ist also durchaus auch ein "kleiner" Einkaufswagen 1 möglich, bei dem der Raddurchmesser der vorderen Lenkrollen 5 mit 125 mm und der Raddurchmesser der hinteren Lenkrollen 6 mit 100 mm festgelegt ist. Das Fahrgestell 2 trägt eine Ladeplattform 3. Anstelle einer Ladeplattform 3 kann als Einrichtung (3) zur Aufnahme und zum Tragen von Gegenständen auch ein Korb bekannter Ausführung vorgesehen sein. Am hinteren Ende des Einkaufswagens 1 ist eine Schiebeeinrichtung 4 vorgesehen, damit der Einkaufswagen 1 von Hand bewegt werden kann. Der Einkaufswagen 1 ist in bekannter Weise so gestaltet, beispielsweise durch konische Formgebung, dass dieser sich mit gleichen Einkaufswagen 1, einen Stapelverbund 10 mit diesen bildend, Platz sparend stapeln lässt.

Fig. 2 zeigt in Seitenansicht einen aus fünf ineinander geschobenen Einkaufswagen 1 gebildeten Stapelverbund 10. Man erkennt die vorderen und die hinteren unterschiedlich großen Lenkrollen 5, 6 der einzelnen Einkaufswagen 1. Die Räder 9 der vorderen und der hinteren Lenkrollen 5,6 befinden sich in der Nachlaufsiellung, die sich dann ergibt, wenn die Einkaufswagen 1 geschoben werden, wie dies beim Einschieben eines Einkaufswagens 1 in das rückwärtige Ende des Stapelverbundes 10 der Fall ist, siehe auch Pfeil. Eingezeichnet sind Masse a und b, deren Bedeutung nachfolgend näher erläutert wird. Man erkennt, dass sich die Räder 9 der vorderen Lenkrollen 5 des zuletzt in den Stapelverbund 10 eingeschobenen Einkaufswagens 1 zwischen den hinteren Lenkrollen 6 zweier benachbarter Einkaufswagen 1 befinden. Dieser Zustand findet sich also bei einem Teil 11 der Einkaufswagen 1 ein, wobei dieser Teil 11 immer größer wird, je mehr Einkaufswagen 1 sich in einem Stapelverbund 10 befinden. Anhand der Zeichnung ist dies leicht vorstellbar.

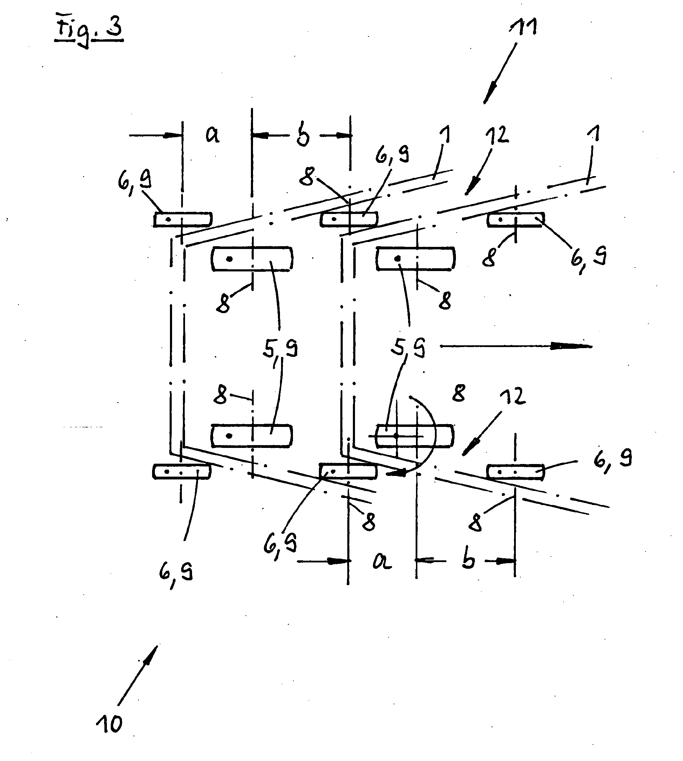

Ausschnittweise und in einer Draufsicht zeigt Fig. 3 die vorderen Lenkrollen 5 zweier Einkaufswagen 1 und die hinteren Lenkrollen 6 dreier Einkaufswagen 1, die sich in einem Stapelverbund 10 befinden. Die Räder 9 der vorderen und der hinteren Lenkrollen 5, 6 befinden sich in der Nachlaufstellung. Die rechts dargestellten vorderen Lenkrollen 5 gehören einem Einkaufswagen 1, der das hintere Ende des Stapelverbundes 10 bildet und der dem Stapelverbund 10 entnommen werden soll. Das Maß a ist kleiner als das Maß b. Dies bedeutet, dass sich bei besagtem Teil 11 der Einkaufswagen 1 im Stapelverbund 10 die Radachsen 8 der vorderen Lenkrollen 5 näher an den Radachsen 8 der hinteren Lenkrollen 6 eines vorausbefindlichen Einkaufswagens 1 befinden als an den Radachsen 8 der hinteren Lenkrollen 6 eines dem vorausbefindlichen Einkaufswagen 1 von hinten nachfolgenden weiteren Einkaufswagens 1. Beim Entnehmen des letzten Einkaufswagens 1 aus dem Stapelverbund 10, siehe Pfeil, schwenken die Räder 9 der vorderen und der hinteren Lenkrollen 5, 6 dieses Einkaufswagens 1 bekanntlich um 180°, um die beim Ziehen des Einkaufswagens 1 sich einstellende neue Nachlaufstellung einzunehmen. Bei einem Rad 9 der beiden vorderen Lenkrollen 5 des zu entnehmenden Einkaufswagens 1 ist ein bogenförmiger Pfeil eingezeichnet, der den Schwenkvorgang des Rades 9 beim Herausziehen des Einkaufswagens 1 darstellen soll. Man erkennt, dass sich das Rad 9 dem Rad 9 einer vorausbefindlichen hinteren Lenkrolle 6 eines anderen Einkaufswagens 1 nähert. Gleichzeitig wandert das Rad 9 dieser vorderen Lenkrolle 5 jedoch in der Zeichnung nach rechts, so dass beim Schwenkvorgang des Rades 9 der vorderen Lenkrolle 5 der Schwenkvorgang in etwa innerhalb des Zwischenraumes 12 stattfindet, der durch die unmittelbar benachbarten Räder 9 zweier hinterer Lenkrollen 6 gebildet ist. Das eben beschriebene Rad 9 schlägt somit nicht an die beiden unmittelbar benachbarten Räder 9 der hinteren Lenkrollen 6 an. Es schlägt auch nicht an die Radgabeln dieser hinteren Lenkrollen 6 an. Sollte das Rad 9 der vorderen Lenkrolle 5 trotzdem an ein Rad 9 von einer der beiden hinteren Lenkrollen 6 anstoßen, weicht das Rad 9 dieser hinteren Lenkrolle 6 aus, so dass es ebenfalls nicht zu einer Verklemmung dieser Räder 9 kommt. Dadurch dass das Maß a kleiner ist als das Maß b wird einer Verklemmung der Räder 9 von vorderen Lenkrollen 5 mit den Rädern 9 von hinteren Lenkrollen 6 entgegengewirkt.

## Patentansprüche

1. Von Hand bewegbarer, für die Verwendung in SB-Märkten bestimmter Einkaufswagen (1), der mit gleichen Einkaufswagen (1), einen Stapelverbund (10) bildend, Platz sparend stapelbar ist, mit:
- einem Fahrgestell, das zwei vordere und zwei hintere Lenkrollen (5, 6) aufweist;
- einer Schiebeeinrichtung (4); sowie
- wenigstens einer Einrichtung (3) zur Aufnahme von Gegenständen;
wobei:
- sich in Platz sparend gestapelter Lage mehrerer Einkaufswagen (1) und in Nachlaufstellung der vorderen und der hinteren Lenkrollen (5, 6) bei einem Teil (11) der Einkaufswagen (1) die Räder (9) der vorderen Lenkrollen (5) zwischen den hinteren Lenkrollen (6) zweier benachbarter Einkaufswagen (1) befinden;
- sich bei einem Stapelverbund (10) mehrerer Einkaufswagen (1), in Seitenansicht betrachtet, bei besagtem Teil (11) der Einkaufswagen (1) die Radachsen (8) der vorderen Lenkrollen (5) näher an den Radachsen (8) der hinteren Lenkrollen (6) eines vorausbefindlichen Einkaufswagens (1) befinden als an den Radachsen (8) der hinteren Lenkrollen (6) eines dem vorausbefindlichen Einkaufswagen (1) von hinten nachfolgenden weiteren Einkaufswagens (1);
**dadurch gekennzeichnet, dass**:
- der Raddurchmesser der vorderen Lenkrollen (5) größer ist als der Raddurchmesser der hinteren Lenkrollen (6).

## Claims

1. A manually movable shopping trolley (1) intended for use in self-service stores, which, forming a stack assembly (10), can be stacked in a space-saving manner with identical shopping trolleys (1), having:
- a wheel frame with two front and two rear steering casters (5, 6);
- a pushing arrangement (4); as well as
- at least one device (3) for receiving objects;
wherein:
- when a plurality of shopping trolleys (1) are stacked in a space-saving manner and when the front and the rear steering casters (5, 6) are in the tracking position, the wheels (9) of the front steering casters (5) are, in the case of a portion (11) of the shopping trolleys (1), located between the rear steering casters (6) of two adjacent shopping trolleys (1);
- when a plurality of shopping trolleys (1) are in a stack assembly (10) and when viewed laterally, the wheel axles (8) of the front steering casters (5) are, in the case of the said portion (11) of the shopping trolleys (1), located closer to the wheel axles (8) of the rear steering casters (6) of a shopping trolley (1) located in front than to the wheel axles (8) of the rear steering casters (6) of a further shopping trolley (1) following from the rear the shopping trolley (1) located in front;
**characterised in that**:
- the wheel diameter of the front steering casters (5) is greater than the wheel diameter of the rear steering casters (6).

## Revendications

1. Chariot d'achat (1) déplaçable manuellement, destiné à être utilisé dans les magasins libre-service, lequel forme avec des chariots d'achat (1) identiques un ensemble emboîté (10) et qui est emboîtable avec un faible encombrement, comportant :
- un châssis de roulement, qui comporte deux roues de direction avant et deux roues de direction arrière (5, 6) ;
- une poignée de manoeuvre (4) ; ainsi que
- au moins un aménagement (3) destiné à recevoir les marchandises ;
sachant que
- dans la position emboîtée à faible encombrement de plusieurs chariots d'achat (1) et dans la position d'alignement des roues de direction avant et arrière (5, 6), les roues (9) des roues de direction avant (5) d'une partie (11) des chariots d'achat (1) se situent entre les roues de direction arrière (6) de deux chariots d'achat (1) adjacents ;
- dans un ensemble emboîté (10) de plusieurs chariots d'achat (1), sur une vue de profil, les essieux (8) des roues de direction avant (5) de ladite partie (11) des chariots d'achat (1) sont plus près des essieux (8) des roues de direction arrière (6) d'un autre chariot d'achat (1) suivant par derrière le chariot d'achat (1) situé devant ;
**caractérisé en ce que**
- le diamètre des roues de direction avant (5) est plus grand que le diamètre des roues de direction arrière (6).
